# EUROPEAN PATENT SPECIFICATION

(11) **EP 1 710 616 B1**
(45) Date of publication and mention of the grant of the patent: **14.11.2007**
(21) Application number: 06007192.5
(22) Date of filing: 05.04.2006
(51) Int. Cl.: G02F 1/1333, G02F 1/1343

(54) **Liquid crystal device and electronic apparatus**
Flüssigkristallvorrichtung und elektronisches Gerät
Dispositif à cristaux liquides et appareil électronique

(30) Priority: 06.04.2005 JP 2005109443
(43) Date of publication of application: 11.10.2006
(73) Proprietor: Seiko Epson Corporation, Shinjuku-ku, Tokyo 163-0811 (JP)
(72) Inventor: Noda, Yoichi, Suwa-shi Nagano-ken 392-8502 (JP)
(74) Representative: HOFFMANN EITLE

(56) References cited:
- EP-A- 1 478 016
- US-A1- 2001 020 991
- US-A1- 2004 252 260
- PATENT ABSTRACTS OF JAPAN vol. 016, no. 516 (P-1443), 23 October 1992 (1992-10-23) -& JP 04 190217 A (RICOH CO LTD), 8 July 1992 (1992-07-08)
- PATENT ABSTRACTS OF JAPAN vol. 1996, no. 09, 30 September 1996 (1996-09-30) & JP 08 122803 A (CASIO COMPUT CO LTD), 17 May 1996 (1996-05-17)

## Description

### BACKGROUND

### 1. Technical Field

The present invention relates to a liquid crystal device having a multi-gap structure.

### 2. Related Art

In general, a technology in which in a liquid crystal panel (liquid crystal device), the thickness of a liquid crystal layer (thickness of a cell) for each of red (R), green (G), and blue (B) is optimized so as to prevent light from leaking due to wavelength dispersion, that is, a so-called multi-gap structure has been known (for example, see JP-A-4-362919, JP-A-7-175050, and JP-A-2003-5213).

In the multi-gap structure according to the related art, in order to optimize the cell thickness, the thickness of a colored layer of a color filter for each color is controlled, or a top coat film, which is made of an acrylic resin film or a silicon oxide film, is formed on a light transmitting pixel electrode (ITO film), and the thickness of the top coat film is controlled for each color.

However, according to the technology for controlling the thickness of the colored layer, there is a problem in that a color coordinate characteristic may be deteriorated when the pigment concentration is adjusted.
For example, when a relatively thick colored layer is formed, if the brightness between the corresponding colored layer and another colored layer is made to be uniform, the pigment concentration of the thick colored layer becomes lighter.
As a result, the entire color coordinate becomes closer to white.

Further, according to the technology in which the topcoat film is formed on the electrode, there is a problem in that the number of processes increases, which results in higher cost.
A liquid crystal display device in which the electrodes have different thicknesses in different color regions is known from JP-08122803 and from JP-04190217.
SUMMARY

An advantage of some aspects of the invention is that it provides a liquid crystal device with a multi-gap structure which is capable of improving a display quality and achieving a low cost.

According to a first aspect of the invention, there is provided a liquid crystal display device according to claim 1.

In the liquid crystal device according to the first aspect of the invention, the multi-gap structure is achieved on the basis of the differences in the film thickness among the plurality of electrodes that correspond to the plurality of colors. Therefore, it is possible to resolve the deterioration of the color coordinate characteristic in the multi-gap structure according to the related art. In addition, it is possible to improve a display quality through the multi-gap structure and the optimization of the color coordinate.

Preferably, the plurality of electrodes are formed by using a liquid phase method.

In the liquid phase method, a liquid material is arranged on the substrate, the corresponding film is subjected to a heat treatment, and a conductive electrode is obtained. As a technology for arranging the liquid material, a liquid droplet ejection method (inkjet method), is used. The banks are used for defining arrangement regions when liquid materials for forming the plurality of electrodes are arranged on the substrate. In addition, since the manufacturing process can be simplified and an amount of used materials can be reduced, the liquid phase method is very effective in reducing the manufacturing cost.

By using the inkjet method, for each arrangement region, an amount of a liquid material can be easily varied or the concentration of the liquid material can be easily varied.

According to a second aspect of the invention, there is provided an electronic apparatus including the above-mentioned liquid crystal device.

According to this aspect, an electronic apparatus, which has an excellent display quality and can be manufactured at a low cost, is obtained.

### BRIEF DESCRIPTION OF THE DRAWINGS

The invention will be described with reference to the accompanying drawings, wherein like numbers reference like elements.

Fig. 1 is a diagram schematically illustrating a sectional structure of a passive-matrix-type liquid crystal device which is a liquid crystal device according to a first embodiment of the invention according to a first embodiment of the invention.

Fig. 2 is a diagram illustrating a form in which the differences in the film thickness exist among a plurality of colored layers.

Fig. 3 is a perspective view schematically illustrating a structure of a liquid drop ejection device which is suitable for an inkjet method.

Fig. 4 is a diagram illustrating an example of a method of forming a plurality of electrodes using an inkjet method.

Fig. 5 is a diagram illustrating a liquid crystal device according to a second embodiment of the invention.

Fig. 6 is a diagram illustrating an example where an embodiment of the invention is applied to an active-matrix-type liquid crystal device.

Fig. 7 is a diagram illustrating another example where an embodiment of the invention is applied to an active-matrix-type liquid crystal device.

Fig. 8 is a schematic cross-sectional view illustrating a CAP coat method.

Fig. 9 is a perspective view illustrating a structure of an example of an electronic apparatus.

### DESCRIPTION OF EXEMPLARY EMBODIMENTS

Hereinafter, the preferred embodiments of the invention will be described in detail with reference to the accompanying drawings.

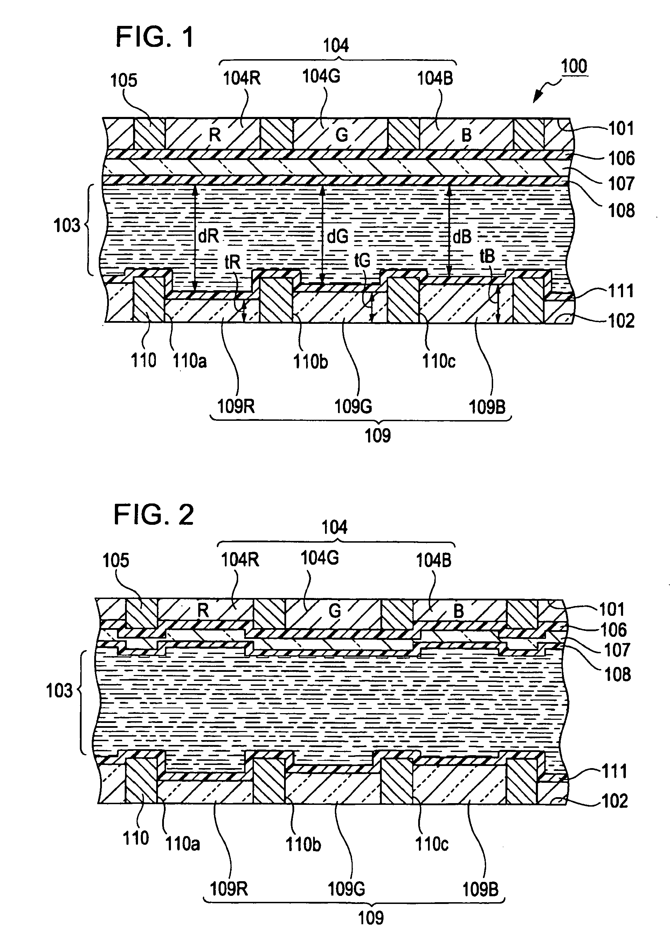

Fig. 1 is a diagram schematically illustrating a sectional structure of a passive-matrix-type liquid crystal device (liquid crystal display device) with a multi-gap structure which is a liquid crystal device according to a first embodiment of the invention.

As shown in Fig. 1, a liquid crystal device 100 has a structure in which a liquid crystal layer 103 is interposed between a pair of substrates (a first substrate 101 and a second substrate 102) that are disposed so as to be opposite to each other. Each of the pair of substrates is a transmissive type and made of glass or the like, and the liquid crystal layer 103 is composed of TN (Twisted Nematic) liquid crystal or the like. Further, the liquid crystal device 100 includes a driver IC (not shown) that supplies a driving signal to the liquid crystal layer, a backlight (not shown) that serves as a light source, or the like.

On an inner surface of the first substrate 101, color filters 104 are disposed. The color filters 104 have colored layers 104R of red (R), colored layers 104G of green (G), and colored layers 104B of blue (B). The plurality of colored layers 104R, 104G, and 104B are regularly disposed in a plane of the substrate 101. Banks 105, each of which is made of a light shielding member, are formed among these colored layers 104R, 104G, and 104B. An overcoat film 106, which is made of a resin or the like, is disposed on the color filters 104 and the banks 105.

In addition, on the overcoat film 106, a plurality of light transmitting electrodes 107 are formed in a stripe. Each of the plurality of electrodes 107 is made of a light transmitting conductive film, such as ITO (Indium Tin Oxide). Further, an alignment film 108, which is made of resin or the like, is formed on the overcoat film 106.

On an inner surface of the second substrate 102, a plurality of light transmitting electrodes 109 (pixel electrodes) are formed in a stripe, such that they cross the plurality of electrodes 107 provided on the first substrate 101 side. Each of the plurality of electrodes 109 is formed of a light transmitting conductive material, such as ITO (Indium Tin Oxide) or the like. In this case, the plurality of electrodes 109 includes electrodes 109R that are disposed so as to be opposite to the colored layers 104R and correspond to red (R), electrodes 109G that are disposed so as to be opposite to the colored layers 104G and correspond to green (G), and electrodes 109B that are disposed so as to be opposite to the colored layers 104B and correspond to blue (B). Among the plurality of electrodes 109R, 109G, and 109B, banks 110 are formed which partition the plurality of electrodes 109R, 109G, and 109B. That is, the plurality of electrodes 109R, 109G, and 109B are disposed in openings 110a, 110b, and 110c of the banks 110. The banks 110 are collectively formed on the substrate 102 by means of a patterning process using a photolithography method.

Further, an alignment film 111, which is made of a resin or the like, is formed on the plurality of electrodes 109R, 109G, and 109B and the banks 110.

If a voltage is applied between any electrode 107 of the first substrate 101 and any electrode 109 of the second substrate 102, alignment of liquid crystal molecules of the liquid crystal layer 103, which corresponds to an intersection between both electrodes 107 and 109, varies in response to the applied voltage. A polarizing plate (not shown) is provided on an external surface side of each of the color filter 104 and the second substrate 102. Between the substrates 101 and 102, a spacer and a sealant for preventing an external air from inflowing into the liquid crystal layer 103 (all of them are not shown) are disposed. The sealant is made of, for example, a thermosetting resin, a photo-curable resin or the like.

In addition, in the liquid crystal device 100 according to the present embodiment, the multi-gap structure is achieved on the basis of the differences in the film thickness among the plurality of electrodes 109R, 109G, and 109B that are provided on the second substrate 102.

That is, the thickness (tR) of the electrode 109R that corresponds to red (R), the thickness (tG) of the electrode 109G that corresponds to green (G), and the thickness (tB) of the electrode 109B that corresponds to blue (B) are different from each other. In this case, the two layers are substantially the same as each other in the thickness, and the two layers are different from the other layer in the thickness. In addition, the thickness (dR) of the liquid crystal layer 103 that exists between the colored layer 104R corresponding to red (R) and the electrode 109R, the thickness (dG) of the liquid crystal layer 103 that exists between the colored layer 104G corresponding to green (G) and the electrode 109G, and the thickness (dB) of the liquid crystal layer 103 that exists between the colored layer 104B corresponding to blue (B) and the electrode 109B are different from one another on the basis of the differences in the film thickness. If the thickness tR (tG and tB) of the electrodes 109R (109G and 109B) is relatively large, the thickness dR (dG and dB) of the corresponding liquid crystal layer 103 is relatively small. In contrast, if the thickness tR (tG and tB) of the electrodes 109R (109G and 109B) is relatively small, the thickness dR (dG and dB) of the corresponding liquid crystal layer 103 is relatively large. For example, if the condition tR < tG < tB is satisfied, the condition dR > dG > dB is also satisfied.

The differences in the film thickness among the plurality of electrodes 109R, 109G, and 109B are determined on the optimal thickness for each of colors (R, G, and B) of the liquid crystal layers 103. In order to optimize the thickness of the liquid crystal layer, for example, technologies disclosed in JP-A-4-362919 and JP-A-7-159770 can be used. In addition, the thickness of each of the electrodes 109R, 109G, and 109B is set within a range of the thickness at which necessary conductivity can be ensured.

As such, in the liquid crystal device 100 according to the present embodiment, the multi-gap structure is achieved on the basis of the differences in the film thickness among the plurality of electrodes 109R, 109G, and 109B that are provided on the second substrate 102. Therefore, there is little restriction in a shape of each of colored layers 104R, 104G, and 104B of the color filters 104 or a method of forming each of the colored layers, and by controlling the pigment concentration (pigment density) of the respective colored layers 104R, 104G, and 104B or the film thickness, the color coordinate can be optimized. In addition, in the liquid crystal device 100 according to the present embodiment, the light leakage can be prevented by the multi-gap structure or the color coordinate can be optimized, which results in improvement of the display quality.

Further, as shown in Fig. 2, when the differences in the film thickness exist among the plurality of colored layers 104R, 104G, and 104B, the differences in the film thickness among the plurality of electrodes 109R, 109G, and 109B may be adjusted on the basis of the differences in the film thickness among the plurality of colored layers 104R, 104G, and 104B.

Referring back to Fig. 1, in the liquid crystal device 100 according to the present embodiment, banks 110, which partition the plurality of electrodes 109R, 109G, and 109B, are further formed on the second substrate 102. Therefore, a liquid phase method can be used in forming the plurality of electrodes 109R, 109G, and 109B. In the liquid phase method, the liquid material is disposed on the substrate, the corresponding film is subjected to a heat treatment, and a conductive electrode is obtained. As a technology for arranging the liquid material, a liquid drop ejection method (inkjet method), is used. The banks 110 are used as partitioning members for defining arrangement regions when the liquid materials for forming the plurality of electrodes 109R, 109G, and 109B are disposed on the substrate 102. In addition, since the manufacturing process can be easily simplified and an amount of used materials can be easily reduced, the liquid phase method is very effective in reducing the manufacturing cost. In particular, by using the inkjet method, for each arrangement region, an amount of a liquid material can be easily varied or the concentration of the liquid material can be easily varied.

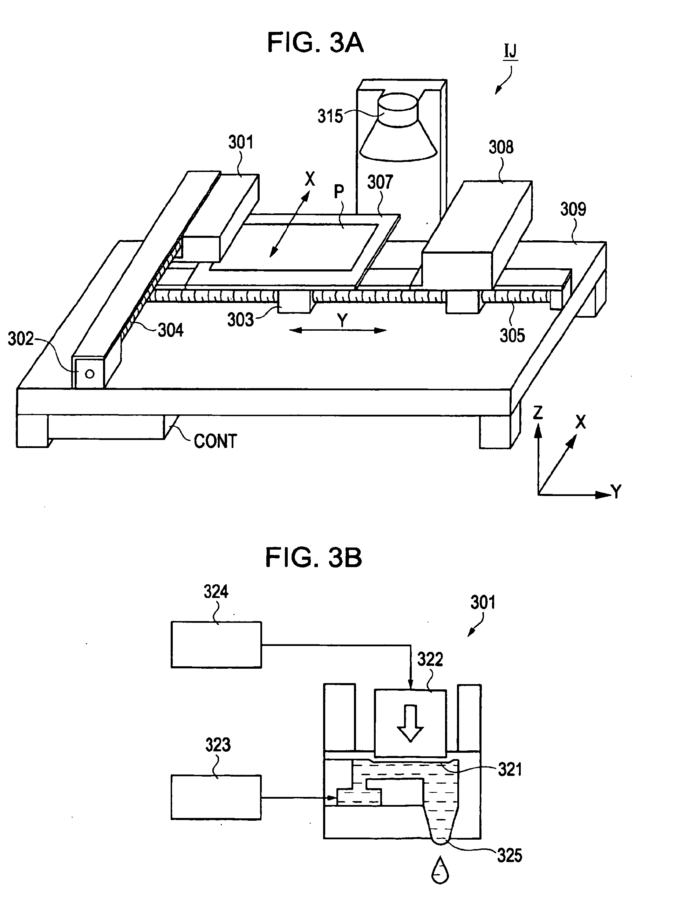

Fig. 3A is a perspective view schematically illustrating a structure of a liquid drop ejection device IJ which is suitable for an inkjet method.

The liquid droplet ejection device IJ includes a liquid droplet ejection head 301, an X-axis direction driving shaft 304, a Y-axis direction guide shaft 305, a control device CONT, a stage 307, a cleaning mechanism 308, a base stand 309, and a heater 315.

The stage 307 supports a substrate P on which the ink (liquid material) is ejected by the liquid droplet ejection device IJ, and has a fixation mechanism (not shown) that fixes the substrate P on a reference location.

The liquid droplet ejection head 301 corresponds to a multi-nozzle-type liquid droplet ejection head having a plurality of ejection nozzles, which makes a longitudinal direction equal to a Y-axis direction. The plurality of ejection nozzles are disposed on the bottom surface of the liquid droplet ejection head 301 in a Y-axis direction at predetermined gaps. From the ejection nozzles of the liquid droplet ejection head 301, the ink is ejected onto the substrate P that is supported on the stage 307.

The X-axis direction driving shaft 304 is connected to an X-axis direction driving motor 302. The X-axis direction driving motor 302 corresponds to a stepping motor. If the X-axis direction driving motor 302 is supplied with an X-axis direction driving signal from the control device CONT, it rotates the X-axis direction driving shaft 304. If the X-axis direction driving shaft 304 rotates, the liquid droplet ejection head 301 moves to an X-axis direction.

The Y-axis direction guide shaft 305 is fixed on the base stand 309 so as not to move. The stage 307 has a Y-axis direction driving motor 303. The Y-axis direction driving motor 303 corresponds to a stepping motor. If the Y-axis direction driving motor 303 is supplied with a Y-axis direction driving signal from the control device CONT, it moves the stage 307 in a Y-axis direction.

The control device CONT supplies a liquid droplet ejection control voltage to the liquid droplet ejection head 301. In addition, a driving pulse signal for controlling the movement of the liquid droplet ejection head 301 in an X-axis direction is supplied to the X-axis direction driving motor 302, and a driving pulse signal for controlling the movement of the stage 307 in a Y-axis direction is supplied to the Y-axis direction driving motor 303.

The cleaning mechanism 308 cleans the liquid droplet ejection head 301. The cleaning mechanism 308 is provided with a Y-axis direction driving motor (not shown). When the Y-axis direction driving motor is driven, the cleaning mechanism moves along the Y-axis direction guide shaft 305. The movement of the cleaning mechanism 308 is also controlled by the control device CONT.

The heater 315 subjects the substrate P to the heat treatment through lamp annealing, and evaporates and dries a solvent that is contained in the liquid material applied on the substrate P. Also, the control device CONT controls whether the power is supplied to the heater 315 or not.

The liquid droplet ejection device IJ ejects the liquid droplet onto the substrate P while relatively scanning the liquid droplet ejection head 301 and the stage 307 for supporting the substrate P. In the below description, the X-axis direction is set to the scanning direction, and the Y-axis direction orthogonal to the X-axis direction is set to the non-scanning direction. Accordingly, the ejection nozzles of the liquid droplet ejection head 301 are provided at predetermined gaps in the Y-axis direction that is the non-scanning direction. In addition, in Fig. 3A, the liquid droplet ejection head 301 is disposed at a right angle with respect to the moving direction of the substrate P. However, the angle of the liquid droplet ejection head 301 with respect to the substrate P is adjusted, and the liquid droplet ejection head 301 may be disposed so as to cross the moving direction of the substrate P. In this way, the angle of the liquid droplet ejection head 301 is adjusted, so that the pitch between the nozzles can be adjusted. In addition, the distance between the substrate P and the nozzle surface may be arbitrarily adjusted.

Fig. 3B is a diagram schematically illustrating a structure of the liquid droplet ejection head for explaining the liquid material ejection principle of the piezo type.

In Fig. 3B, a piezo element 322 is disposed so as to be adjacent to a liquid chamber 321 that accommodates the liquid material (ink). The liquid material is supplied to the liquid chamber 321 through a liquid material supply system 323 including a material tank. The piezo element 322 is connected to the driving circuit 324. A voltage is applied to the piezo element 322 through the driving circuit 324 so as to deform the piezo element 322, and the liquid chamber 321 is elastically deformed. In addition, the inner volume varies at the time of the elastic deformity, so that the liquid material is ejected from the nozzle 325. In this case, a distortion amount of the piezo element 322 can be controlled by varying the applied voltage value. In addition, the distortion speed of the piezo element 322 can be controlled by varying the frequency of the applied voltage. In the liquid droplet ejection of the piezo type, the heat is not applied to the material, which results in not affecting a composition of the material.

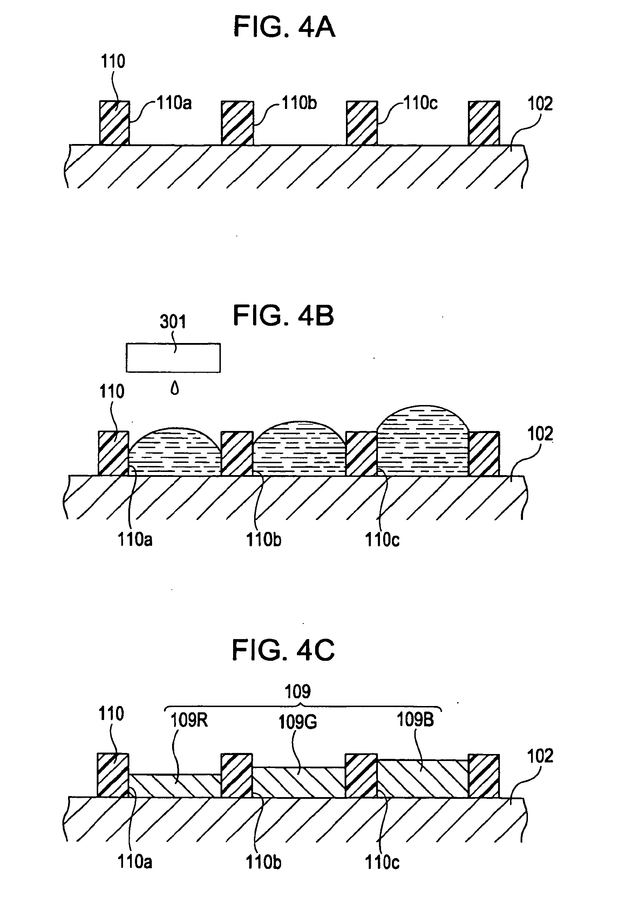

Fig. 4 is a diagram illustrating an example of a method of forming the plurality of electrodes 109R, 109G, and 109B shown in Fig. 1 by means of an inkjet method. Hereinafter, the method of forming the electrodes will be described with reference to Fig. 4.

First, as shown in Fig. 4A, the substrate 102 becoming the base is arranged, and the banks 110 are formed on one surface side of the substrate 102.

As a material for forming the substrate 102, various materials, such as glass, quartz glass, a Si wafer, a plastic film, a metallic plate, or the like, can be used. In addition, on surfaces of various element substrates, a base layer, such as a semiconductor layer, a metallic film, a dielectric film, an organic film, or the like, and a switching element, such as a TFT (thin film transistor), or the like, may be formed.

The banks 110 correspond to partition members that two-dimensionally partition the substrate surface. Any method, such as a photolithography method, a printing method, or the like, may be used in forming the banks. For example, when the photolithography method is used in forming the banks, by means of a predetermined method, such as a spin coat method, a spray coat method, a roll coat method, a die coat method, a deep coat method, or the like, an organic photosensitive material, such as an acrylic resin or the like, is applied in accordance with the height of the bank that is formed on the substrate, thereby forming a photosensitive material layer. In addition, ultraviolet rays are irradiated onto the photosensitive material layer in accordance with a desired bank shape, thereby forming the banks 110 having predetermined openings 110a, 110b, and 110c. As a material for forming the bank 110, for example, a polymer material, such as an acrylic resin, a polyimide resin, an olefin resin, a melamine resin, or the like, is used. The bank 110 may be a structure of an inorganic material that is formed by using a liquid material containing polysilazane.

In order to improve arrangement of the material ink into the openings 110a, 110b, and 110c, the banks 110 are subjected to a lyophobic process, if necessary.

As the lyophobic process, for example, a plasma process method (CF₄ plasma process method) can be used in which tetrafluoromethane is used as process gas in the atmosphere. According to the condition of the CF₄ plasma process, for example, plasma power is 50 to 1000 kW, a tetrafluoromethane gas flow rate is 50 to 100 ml/min, a substrate carrying speed with respect to a plasma discharging electrode is 0.5 to 1020 mm/sec, and the substrate temperature is 70 to 90°C. In addition, the process gas is not limited to the tetrafluoromethane (tetrafluorocarbon), but another fluorocarbon gas may be used.

By performing this lyophobic process, in the bank 110, fluorine group is introduced in the resin for forming the bank, and a high lyophobic property is applied.

In addition, in order to clean the surface of the substrate that is exposed to the bottom surfaces of the openings 110a, 110b, and 110c before performing the lyophobic process, an ashing process using O₂ plasma or an UV (ultraviolet) irradiation process is performed, if necessary. If these processes are performed, a residue on the bank of the substrate surface can be removed. After the lyophobic process, the difference between a contacting angle of the bank 110 and a contacting angle of the surface of the corresponding substrate can be increased, and the liquid droplet, which is disposed in the opening of the bank 110 in the process of the rear stage, can be accurately confined in the opening. In addition, when the bank 110 is made of an acrylic resin or a polyimide resin, if the bank 110 is exposed to O₂ plasma before the CF₄ plasma process, it may be further easily fluorinated (becoming a lyophobic property). Therefore, when the bank 110 is formed of this resin material, the O₂ ashing process is preferably performed before the CF₄ plasma process.

Specifically, the O₂ ashing process is performed by irradiating oxygen of a plasma state onto the substrate from the plasma discharging electrode. According to the process condition of the O₂ ashing process, for example, plasma power is 50 to 1000 kW, an oxygen gas flow rate is 50 to 100 ml/min, a substrate carrying speed with respect to the plasma discharging electrode is 0.510 to 10 mm/sec, and the substrate temperature is 70 to 90°C.

In addition, the bank 110 is subjected to the lyophobic process (CF₄ plasma process), which results in slightly affecting the surface of the substrate which has had a lyophilic property by the previously performed residue process. However, in particular, when the substrate is made of glass, since it is difficult for the fluorine group to be introduced due to the lyophobic process, the lyophilic property of the substrate, that is, wettability is not substantially lowered. In addition, the bank 110 may be formed of a material having the lyophobic property (for example, a resin material containing a fluorine group), and thus the lyophobic process may be omitted.

Next, as shown in Fig. 4B, the material ink of the electrodes 109R, 109G, and 109B drops from the liquid droplet ejection head 301 (see Fig. 3) of the liquid droplet ejection device IJ with respect to each of the openings 110a, 110b, and 110c that are provided in the banks 110. For example, the material ink is used in which minute particles of light transmitting conductive materials, such as ITO, IZO, FTO, or the like, disperse into the solvent (dispersion medium). In addition, a liquid material may be used which contains the ITO minute particle and a silicon organic compound, or a liquid material may be used which contains the ITO minute particles, an indium organic compound, and a tin organic compound. By using these liquid materials, a light transmitting conductive film can be formed which has a structure in which the ITO minute particles are firmly bonded by a matrix of SiO₂ or ITO made of the metallic organic compound. Even though the firing temperature is relatively low temperature, a light transmitting conductive film can be formed in which ITO minute particles are densely disposed, and excellent conductivity among the minute particles is obtained. At the time of dropping the material ink, if the lyophobic property is applied to the surface of the bank 110 and the lyophilic property is applied to the surface of the substrate of the bottom surface portion of the opening, even though a portion of the ejected droplet is loaded on the bank 110, the ink is landed on the surface of the bank so as to slide into the opening.

In addition, at the time of arranging the materials for forming the electrodes 109R, 109G, and 109B, an amount of arranged material ink and/or the concentration of the ink varies in accordance with the desired differences in the film thickness. That is, in a region for forming the relatively thick film (opening of the bank 110), a relatively large amount of ink and/or the ink of the high concentration is disposed. In a region for forming a relatively thin film (opening of the bank 110), a relatively small amount of ink and/or the ink of the low concentration is disposed. By using the inkjet method, an amount of a liquid material can be easily varied for each arrangement region or the concentration of the liquid material can be easily varied.

Next, as shown in Fig. 4C, in order to remove a dispersion medium after arranging the material for forming the electrodes 109R, 109G, and 109B, a drying process is performed, if necessary. The drying process can be performed by a heating process using a general hot plate for heating the substrate, an electrical furnace, or the like. According to the condition of the drying process, for example, the heat temperature is 180°C, and the heating time is about 60 minutes. The heating is not necessarily performed in the atmosphere, that is, the heating may be performed in the nitrogen gas atmosphere or the like.

In addition, the drying process can be performed by lamp annealing. A light source of the light, which is used for lamp annealing, is not particularly limited. However, as the light source, an ultraviolet lamp, a xenon lamp, a YAG laser, an argon laser, a carbonic acid gas laser, an excimer laser, such as XeF, XeCl, XeBr, KrF, KrCl, ArF, ArCl, or the like, can be used. As the light source, a light source in which output power is within a range of 10 to 5000 W is generally used, but in the present embodiment, a light source in which output power is within a range of 100 to 1000 W may be used.

Next, a firing process (a heating process and/or an optical process) is performed on a drying film of a material of each of the electrodes 109R, 109G, and 109B.

In a case in which a coating agent, such as an organic material or the like, for improving electrical contact among the minute particles, completely removing the dispersion medium, or improving dispersibility in the liquid, is coated on a surface of a conductive minute particle, the firing process is performed for the purpose of removing the coating agent.

The heat treatment and/or the optical process is generally performed in the atmosphere, but it may be performed in an inert gas atmosphere, such as nitrogen, argon, helium, or the like, if necessary. The process temperature of the heat treatment and/or the optical process is properly determined on the basis of a boiling point of a dispersion medium (vapor pressure), a kind or pressure of atmosphere gas, thermal behavior, such as dispersibility or oxidization of a minute particle, whether the coating agent exists or not or an amount of coating agent, the heat-resistant temperature of the base, or the like.

In addition, by means of the firing process, electrical contact among the minute particles in the drying film of the material of each of the electrodes 109R, 109G, and 109B is ensured, and thus it is converted into a light transmitting conductive film. As a result, in the respective openings 110a, 110b, and 110c of the banks 110, the plurality of electrodes 109R, 109G, and 109B, each of which has the different film thickness, are formed.

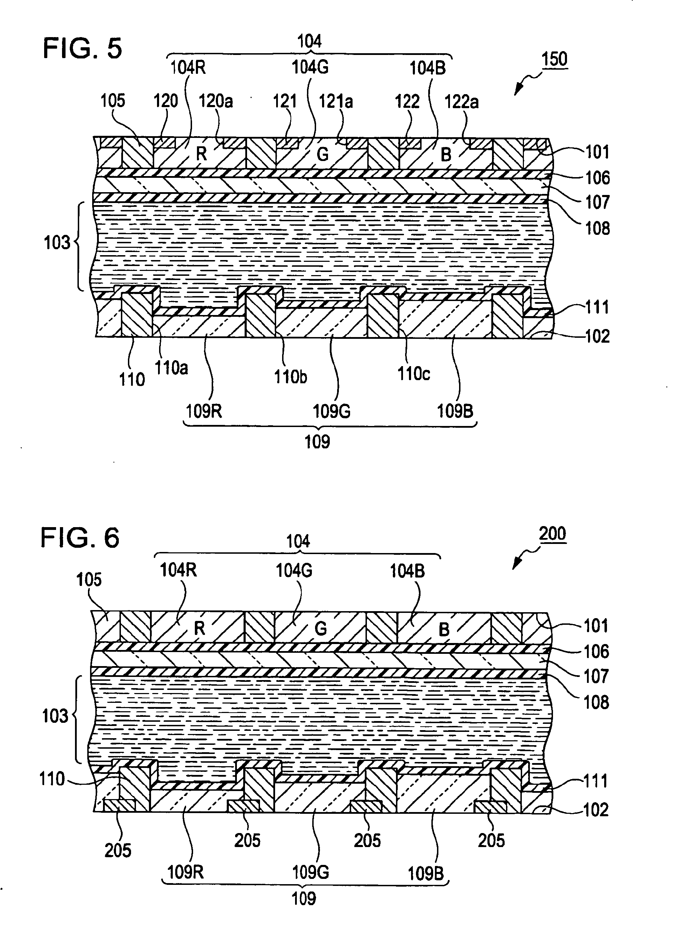

Fig. 5 is a diagram schematically illustrating a sectional structure of a liquid crystal device (liquid crystal display device) according to another embodiment of the invention. In Fig. 5, constituent elements, which have the same functions as the liquid crystal device 100 shown in Fig. 1, are denoted by the same reference numerals, and the description thereof will be omitted or simplified.

The liquid crystal device 150 shown in Fig. 5 corresponds to a transflective liquid crystal device.

That is, in the first substrate 101, reflective films 120, 121, and 122 are formed on portions of the bottom portions of the respective colored layers 104R, 104G, and 104B of the color filters 104. The respective reflective films 120, 121, and 122 have the openings 120a, 121a, and 122a that can transmit the light, respectively.

In the liquid crystal device 150, a portion of light from the second substrate 102 side is reflected on the reflective films 120, 121, and 122 and then emitted to the outside from the external surface side of the second substrate 102. In addition, the other light passes through the openings 120a, 121a, and 122a of the reflective films 120, 121, and 122 so as to be emitted to the outside from the external surface side of the first substrate 101.

In addition, in the transflective liquid crystal device 150, similar to the liquid crystal device 100 of Fig. 1, the multi-gap structure is achieved on the basis of the thickness difference among the plurality of electrodes 109R, 109G, and 109B in the second substrate 102.

Fig. 6 is a diagram illustrating an example in which an embodiment of the invention is applied to an active-matrix-type liquid crystal device. In Fig. 6, constituent elements, which have the same functions as the liquid crystal device 100 shown in Fig. 1, are denoted by the same reference numerals, and the description thereof will be omitted or simplified.

As shown in Fig. 6, in the active-matrix-type liquid crystal device 200, a plurality of TFT elements 205 are formed on the substrate 102 so as to correspond to the plurality of electrodes 109R, 109G, and 109B.

In addition, in the active-matrix-type liquid crystal device 200, similar to the liquid crystal device 100 shown in Fig. 1, the multi-gap structure is achieved on the basis of the thickness difference among the plurality of electrodes 109R, 109G, and 109B in the second substrate 102.

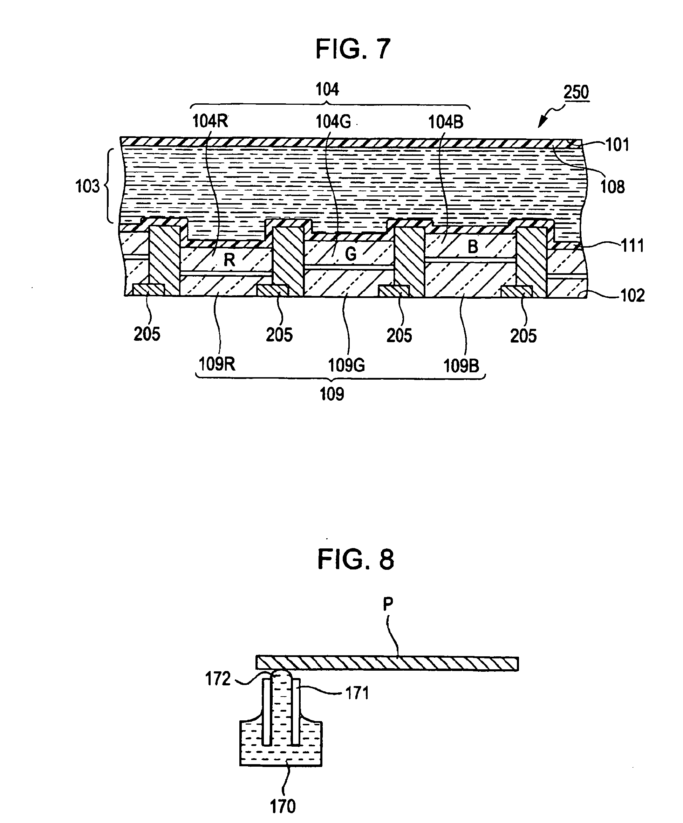

Fig. 7 is a diagram illustrating another example in which an embodiment of the invention is applied to an active-matrix-type liquid crystal device. In Fig. 7, constituent elements, which have the same functions as the liquid crystal device 200 shown in Fig. 6, are denoted by the same reference numerals, and the description thereof will be omitted or simplified.

In the active-matrix-type liquid crystal device 250 shown in Fig. 7, similar to the liquid crystal device 200 shown in Fig. 6, a plurality of TFT elements 205 are formed on the substrate 102 so as to correspond to the plurality of electrodes 109R, 109G, and 109B.

In addition, in the active-matrix-type liquid crystal device 250, similar to the liquid crystal device 200 shown in Fig. 6, the multi-gap structure is achieved on the basis of the thickness difference among the plurality of electrodes 109R, 109G, and 109B in the second substrate 102.

In addition, in the liquid crystal device 250, on the same substrate 102 on which the plurality of TFT elements 205 are formed, the plurality of electrodes 109R, 109G, and 109B, each of which has the different film thickness, and color filters 104 including the colored layers 104R, 104G, and 104B are formed. In addition, a counter electrode 108 (solid film) is formed on the entire surface of the counter substrate 101.

Through this structure, there is no thermal restriction of the color filter 104 when the electrode 108 is formed. Therefore, due to no restriction in a method of forming the electrode 108, a method of forming the electrode suitable for low cost, such as a liquid phase method, can be used.

In addition, a conductive particle is added to the color filter 104 so as to have conductivity, so that it is possible to prevent a signal waveform from being rounded due to the dielectric inserted between the electrode 109 and the liquid crystal layer.

In addition, in the above-mentioned example, the liquid droplet ejection method has been used which uses the liquid droplet ejection device so as to eject the liquid droplet (liquid material). The Cap coat method is a film forming method that uses a capillary phenomenon. In a state in which slits 171 are inserted into a coating liquid 170, if the coating liquid surface is raised, a liquid clot 172 is formed on an upper end of the slit 171. The substrate P comes into contact with the liquid clot 172 and moves the substrate P so as to be parallel to a predetermined direction, which results in coating the coating liquid 170 on the surface of the substrate P.

In addition, in the above-mentioned example, the banks serving as partition members (segment portions) at the time of the material arrangement in the liquid phase method are formed on the substrate, but a region having a lyophobic property may be formed on the substrate with respect to the arrangement material as the segment portion. As a method of forming the region having the lyophobic property, for example, a method of forming a self-assembled monolayer on the surface of the substrate, a plasma process method, a method of coating a polymer compound having a lyophobic property on the surface of the substrate, or the like, may be used. Even though any lyophobic process is used, a high lyophobic property can be applied to the surface of the substrate.

In the method of forming the self-assembled layer, a self-assembled layer made of an organic molecular film or the like is formed.

Molecules constituting the organic molecule film for processing the surface of the substrate have a functional group that can be bonded to the substrate, a functional group, such as a lyophilic group or a lyophobic group, that reforms characteristics of the surface of the substrate (controlling surface energy), and a normal chain of carbon or a partially branched carbon chain, which bonds these functional groups to each other. Further, the molecules are bonded to the substrate to form a self-assembled molecule film, for example, a monomolecular film.

The self-assembled monolayers (SAMs) are layers that are manufactured by a self-assembly method (SA) which is a method that fixes molecules on the surface of a solid and thus a molecule layer with high alignment can be formed with a high density. The self-assembly method can operate the circumference of molecules and geometric arrangement in an angstrom order. In addition, the self-assembled monolayer becomes one of the effective tools in a fixation technology of organic molecules. The self-assembled monolayer contributes to simplicity of a manufacturing method and thermal stability of a film, existing between the molecules and the substrate, for performing chemical coupling. Therefore, it is an important technology for manufacturing a molecular element in an angstrom order. In addition, the self-assembled monolayer basically corresponds to a self-assembly process, and can spontaneously form a minute pattern. That is, the self-assembled monolayer can simply form a high degree of dense pattern which is used for a superfine electronic circuit.

As a compound having high alignment, for example, fluoroalkylsilane is used, each compound is aligned such that a fluoroalkyl group is located on the surface of the film, the self-assembled layer is formed, and the lyophobic property can be applied uniformly to the surface of the film.

In addition, examples of a compound for forming the self-assembled layer may include fluoroalkylsilane (hereinafter, also referred to as "FAS"), such as heptadecafluoro-1, 1, 2, 2 tetrahydrodecyl-triethoxysilane, heptadecafluoro-1, 1, 2, 2 tetrahydrodecyltrimethoxysilane, heptadecafluoro-1, 1, 2, 2 tetrahydrodecyltrichlorosilane, tridecanfluoro-1, 1, 2, 2 tetrahydrooctyltriethoxysilane, tridecanfluoro-1, 1, 2, 2 tetrahydrooctyltrimethoxysilane, tridecanfluoro-1, 1, 2, 2 tetrahydrooctyltrichlorosilane and trifluoroprophyltrimethoxysilane. In use, one compound may be preferably used independently. It is to be understood that the combination of two or more kinds of compounds can be used, not limited to one kind of a compound. In addition, by using the FAS, it not only imparts the lyophobic property to the surface of the substrate, but also has high adhesiveness to the substrate.

In particular, the FAS is generally represented by the structural formula RₙSiX₍₄₋ₙ₎. In this case, "n" indicates an integer within a range of 1 to 3, and "X" indicates a methoxy group, an ethoxy group, and a hydrolytic group, such as halogen atoms. Further, "R" is a fluoroalkyl group, and has the structure of (CF₃)(CF₂)ₓ(CH₂)_{y} (where, x indicates an integer within a range of 0 to 10, and y indicates an integer within a range of 0 to 4). In a case in which a plurality of R or X are bonded to Si, R and X may be the same or different from each other. The hydrolytic group indicated by X forms silanol with hydrolysis. The hydrolytic group reacts with the hydroxy group at the base such as the substrate (glass, silicon, etc.), and bonds with the substrate through siloxane bond. In the meantime, since R has a fluoric group such as (CF₃) on its surface, it is reformed into a surface (having a low surface energy), which causes a surface of the base of the substrate or the like not to get wet.

In the plasma process method, plasma is then irradiated on the substrate in an atmospheric pressure or vacuum state. In this case, the type of gas used for plasma process can be selected in various ways depending on the material of the surface of the substrate. For example, 4-fluoromethane, perfluorohexane, perfluorodecane, or the like can be used as a treatment gas.

In addition, the process for allowing the surface of the substrate to have the lyophobic property can be performed by bonding a film having a predetermined lyophobic property, for example, a polyimide film having been subjected to a tetrafluoroethylene process, on the surface of the substrate. In addition, the polyimide film can be used as the substrate as it is.

In addition, when the surface of the substrate has a higher lyophobic property than a predetermined lyophobic property, a process for allowing the surface of the substrate to have a lyophilic property is performed by irradiating ultraviolet rays of 170 to 400 nm or exposing the substrate to ozone atmosphere such that the surface state can be controlled.

### Electronic apparatus

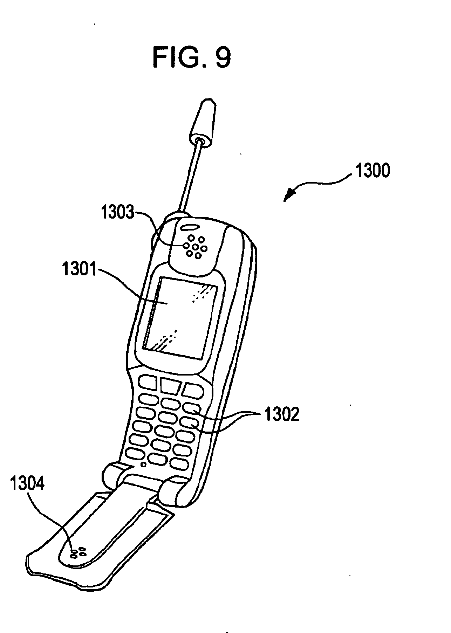

Fig. 9 is a perspective view illustrating an example of an electronic apparatus according to the invention.

In Fig. 9, a cellular phone 1300 includes a small-sized display portion 1301 that is the liquid crystal display device according to the embodiment of the invention, a plurality of operation buttons 1302, an earpiece 1303, and a mouthpiece 1304.

In addition to the cellular phone, the electro-optical device according to the above-mentioned embodiments can be used as an image display unit for each of various apparatuses, such as an electronic book, a personal computer, a digital still camera, a video monitor, a view-finder-type or monitor-direct-view-type video taper recorder, a car navigation device, a pager, an electronic note, an electronic calculator, a word processor, a workstation, a video phone, a POS terminal, an apparatus having a touch panel, or the like. These electronic apparatuses having the electro-optical device have excellent reliability while being low-priced.

As described above, the preferred embodiments of the invention have been described with reference to the accompanying drawings, but the invention is not limited to the above-mentioned embodiments. In addition, it will be apparent to those skilled in the art that various modifications and variations can be made to the invention without departing from the scope of the invention described in claims.

## Claims

1. A liquid crystal display device (100) having a multi-gap structure comprising:
a pair of substrates (101, 102) that are disposed so as to be opposite to each other;
a liquid crystal layer (103) that is disposed between the pair of substrates (101, 102);
a plurality of colored layers (104R, 104G, 104B) that are formed on at least one of the pair of substrates (102)
defining a plurality of color regions; and
a plurality of electrodes (109R, 109G, 109B) that are formed on one of the plurality of substrates (102), at positions corresponding to the plurality of colored regions (104),
wherein electrodes of the plurality of electrodes (109) have different thicknesses (tR, tG, tB) ;
**characterized in that**
it further comprises banks (110) that partition the plurality of electrodes (109);
the plurality of electrodes are formed by using a liquid phase inkjet method; and
an amount of arranged material ink and/or the concentration of ink used for forming the electrodes (109) varies in accordance with the desired thickness.

2. An electronic apparatus comprising the liquid crystal device according to Claim 1.

## Patentansprüche

1. Eine Flüssigkeitskristall-Anzeigeeinrichtung (100) mit einem Multilückenaufbau, umfassend:
ein Paar von Trägern (101, 102), die so angeordnet sind, um zueinander entgegengesetzt zu sein;
eine Flüssigkeitskristallschicht (103), die zwischen dem Paar von Trägern (101, 102) angeordnet ist;
eine Vielzahl von Farbschichten (104R, 104G, 104B), die in mindestens einem des Paares von Trägern (102) ausgebildet sind, die eine Vielzahl von Farbregionen definieren; und
eine Vielzahl von Elektroden (109R, 109G, 109B), die in einem der Vielzahl von Trägern (102) ausgebildet sind, in Positionen entsprechend der Vielzahl von Farbregionen (104),
wobei Elektroden der Vielzahl von Elektroden (109) unterschiedliche Stärken (tR, tG, tB) aufweisen;
**gekennzeichnet dadurch, dass**
sie ferner Bänke (110) umfasst, die die Vielzahl von Elektroden (109) partitionieren;
die Vielzahl von Elektroden durch Verwenden eines Flüssigkeitsphasentintenstrahlverfahrens ausgebildet werden; und
eine Menge von angeordneter Materialtinte und/oder die Konzentration von Tinte, die zum Bilden der Elektroden (109) verwendet wird, in Übereinstimmung mit der gewünschten Stärke variiert.

2. Eine elektronische Vorrichtung, die die Flüssigkeitskristalleinrichtung nach Anspruch 1 umfasst.

## Revendications

1. Dispositif d'affichage à cristaux liquides (100) comportant une structure à espaces multiples comprenant:
une paire de substrats (101, 102) qui sont disposés de façon à se situer en regard l'un de l'autre ;
une couche de cristaux liquides (103) qui est disposée entre la paire de substrats (101, 102) ;
une pluralité de couches colorées (104R, 104G, 104B) qui sont formées sur au moins l'une des paires de substrats (102) définissant une pluralité de régions en couleur ; et
une pluralité d'électrodes (109R, 109G, 109B) qui sont formées sur l'un de la pluralité de substrats (102) , en des positions correspondant à la pluralité de régions en couleur (104),
dans lequel les électrodes de la pluralité des électrodes (109) ont des épaisseurs différentes (tR, tG, tB) ;
**caractérisé en ce qu'**il comprend de plus des rebords (110) qui cloisonnement la pluralité d'électrodes (109) ;
la pluralité d'électrodes est formée par l'utilisation d'un procédé de jet d'encre en phase liquide ; et
une quantité de matière encre disposée et/ou la concentration d'encre utilisée pour former les électrodes (109) varient en fonction de l'épaisseur souhaitée.

2. Appareil électronique comprenant le dispositif à cristaux liquides selon la revendication 1.
